# EUROPEAN PATENT APPLICATION

(11) **EP 1 148 705 A1**
(43) Date of publication of application: **24.10.2001**
(21) Application number: 01200873.6
(22) Date of filing: 09.03.2001
(51) Int. Cl.: H04N 1/32

(54) **Determination of the image orientation in a digital copying apparatus**

(30) Priority: 22.03.2000 NL 1014715
(71) Applicant: Océ-Technologies B.V., 5914 CC Venlo (NL)
(72) Inventor: Collard, René Francois Albert, 6591 TT Gennep (NL); Van Vliembergen, Eduardus Josephus Willibrordus, 5924 AX Venlo (NL)
(74) Representative: van Meeteren, Arend Anthonie

(57) **Abstract**

A digital copying apparatus comprising a scanner unit, a processing unit, a printer unit and a control unit. The control unit defines the image orientation of the image on each document automatically on the basis of the orientation of the document and an assumption that the reading direction of the image on the document is always situated in a fixed predetermined direction with respect to the scanner unit.

When the operator introduces original documents into this apparatus allowing for the said fixed direction, then in by far the majority of cases processing operations related to the image orientation automatically take place correctly. As a result, many settings which normally have to be input to define a copy job are superfluous.

## Description

The invention relates to a digital copying apparatus for making a copy of a document, wherein a document has an orientation associated with a physical direction thereof with respect to the apparatus, and wherein a document contains an image with a reading direction and with an image orientation with respect to the document,
which apparatus comprises
- a scanner unit for scanning a document and in so doing generating a digital image corresponding to the image on the document,
- a processing unit for processing digital images,
- a printer unit for making a copy on the basis of conversion of a digital image into an image on a receiving medium, if necessary observing the image orientation established for the image on the document,
- a control unit connected to the scanner unit, the processing unit and the printer unit.

The two most usual image orientations are "portrait", in which lines of text on the document or copy are parallel to its short side, and "landscape", in which they are parallel to the long side. The "reading direction" means the direction of the lines of text. The reading direction is defined in space and changes when the rotational position of the document or copy is changed.

For a number of processing operations it is important to know the image orientation on the document (and the copy). For example, if a set of copies has to be stapled together, the image orientation determines the location of the staple. A portrait copy is stapled at the left-hand end of a short side while a landscape copy is stapled at the left-hand end of a long side. When duplex copies are made, starting from simplex documents, the image orientation is important for selecting the binding edge, i.e. the edge of the sheet around which the copy must be turned in order legibly to show the back page. In western documents/copies this is usually the edge on the left-hand side of the (readable) image content, i.e. a long side in the case of portrait copies and a short side in the case of landscape copies.

In digital copiers, a document is scanned and thus converted to a set of digital data which describe the image on the document in the form of a raster of image elements or pixels, the value of which corresponds to the local optical density of the image on the document. The digital data are converted to control data with which an image-forming system can be controlled to make prints on receiving material, usually sheets of paper.

Before they are used to form copies, the digital image data from the scanner can be processed and changed. In this way, for example, the image can be rotated. Rotation of images offers extra possibilities of adapting the copies to the operator's wishes.

For example, US-A 5 343 304 describes a digital copier provided with a finishing unit such as a stapler. The latter is at a fixed location and the location where the staple is introduced is thus also fixed. To relieve the operator of the task of considering how the original documents must be introduced to obtain the staple at the correct location, a sheet of paper can be placed above the stack of original documents, said sheet of paper having a marker for the position of the staple. During scanning, the position of the marker is recognised and if necessary the image is rotated to bring the copies into the finishing unit with the correct orientation.

US-A 5 461 459 describes a digital copier with an expanded user interface, in which an operator can specify the image orientation of the original documents and a binding edge for the purpose of duplex printing. This apparatus can also be set to an automatic mode in which the image orientation is determined automatically by analysis of the image data. In this case the direction of the text lines is found by making a histogram of the black pixels for each of the two main axes of the document. If the image orientation of the original document is known, the operator can simply specify the binding edge with respect to the text image, whereafter the machine automatically determines whether this is the long or short side.

EP-A 0 710 003 describes a digital copier which automatically determines the image orientation by examining the image data from the scanner by means of character recognition. In this way the location of a finishing treatment, such as a staple, can be determined without the operator's intervention.

US-A 5 301 036 describes a digital copier with a large number of options for the reproduction of the original images on a copy, such as different forms of duplex copying and different forms of combining images for making booklets ("two-up"). The operator must input on an operating screen for each copying job the document orientation and, in the case of complex jobs, the image orientation of the images on the document (with respect to the document orientation). A copy orientation and an image orientation of the images on the copies (with respect to the copy orientation) must also be input. The apparatus control unit then calculates the necessary image rotations and performs them on the image data during the copying job.

In the known types of apparatus, the image orientation must thus be input by an operator or be automatically determined by analysis of the image data. In the first case extra work is required of the operator while in the second case a complex image processing operation must be carried out which, even with powerful processors, costs considerable time. In both cases the copying apparatus productivity is limited.

The object of the invention is to provide a digital copier according to the preamble wherein, at least for most copying jobs in which the image orientation on the original documents plays a part, high productivity is achieved by the fact that no time is lost for determining said image orientation.

To this end, in an apparatus according to the preamble, the control unit automatically defines the image orientation of the image on each document on the basis of the orientation of the document and an assumption that the reading direction of the image on the document is always situated in a fixed predetermined position with respect to the scanner unit.

Since, according to the invention, the image orientation on the documents is determined on the basis of a machine direction, the operator can easily make the image orientation recognisable to the apparatus by always so introducing the documents that the text direction on the documents is always the same with respect to the machine. He then has no need to concern himself with the relationship between the document orientation and the image orientation.

In one embodiment, the reading direction assumed by the control unit corresponds to the reading direction of an operator standing in front of the apparatus.

The effect of this is that the operator must always introduce the documents in semi-readable form, i.e. readable allowing for the input requirements of the apparatus. If, for example, the operator places the documents on the glass platen this means that he turns the documents, from a position readable to himself, in natural manner and places them on the platen. A portrait document must then be introduced upright, i.e. with the short (bottom) side towards the operator and a landscape document crosswise, i.e. with the long (bottom) side towards the operator.

In another embodiment, the apparatus according to the invention is provided with a finishing unit, such as a stapler, punching device or binding unit, which finishing unit takes into account the automatically determined image orientation. A stapler will thus place a staple at the left-hand side of the short side if the document is introduced upright.

In yet another embodiment of an apparatus according to the invention, in which the printing unit is adapted to make duplex copies by printing on two sides of the receiving medium, the printer unit when making duplex copies of simplex documents automatically selects the binding edge for each copy at a fixed predetermined side with respect to the automatically defined image orientation of the image on the document.

This has the advantage that the apparatus according to the invention selects the binding edge, both for portrait documents and for landscape documents, on one side, in practice mainly the left-hand side of the text, without this requiring any setting to be made by the operator.

In yet another embodiment of an apparatus according to the invention in which the printing unit is adapted to make combination copies by printing at least two images, each originating from a different document, on a single side of the receiving medium, the printer unit in making the combination copies automatically selects the copy orientation for each copy on the basis of the automatically defined image orientation of the images on the documents.

If, for example, two portrait documents are combined on a copy sheet, a landscape copy is obtained on which the original images are disposed next to one another in the sequence left to right. If, on the other hand, two landscape documents are combined on a copy sheet, the result is a portrait copy with the original images in the sequence top to bottom.

Alternatively, it is possible to break down a combination document on which at least two separate images are disposed, and to print the separate images on separate copy sheets, possibly after enlargement. Even with such a breakdown the location of the separate images on the document again plays a part. Also, it is complicated for an operator to program such a job, for a document with two portrait images, for example, is itself a landscape document and the text on the portrait sub-images is in the landscape direction on the document. The operator may then wonder what orientation he must use for programming.

The invention makes it possible to relieve the operator of this burden, by the fact that it is simply necessary to use the reading direction of the sub-images as a feed criterion. In practice, therefore, the invention enables the semi-readable introduction in this case too to be a general specification for the operator.

Other properties and advantages of the invention will be apparent from the following explanation with reference to the accompanying drawings, in which like references refer to like parts. In the drawings:
Fig. 1 is a diagram showing the most important parts of the apparatus according to the invention.
Fig. 2 illustrates the apparatus scanner.
Fig. 3 is a block diagram of a system for processing and intermediate storage of image data used in the apparatus according to the invention.
Fig. 4 illustrates the printer unit.
Fig. 5 is a view of different document categories.
Fig. 6 is a top plan view of the apparatus according to the invention.
Fig. 7 is a flow diagram of a control program to determine an image orientation.
Fig. 8 is a flow diagram of a control program for duplex copying.
Fig. 9 is a flow diagram of a control program for the stapling function.
Fig. 10 is a flow diagram of a control program for making combination copies.
Figs. 11A-C are examples of 4-up copies.
Fig. 12 is a flow diagram of an alternative control program for making a combination copy and
Fig. 13 is a flow diagram of a control program for breaking down a combination document.

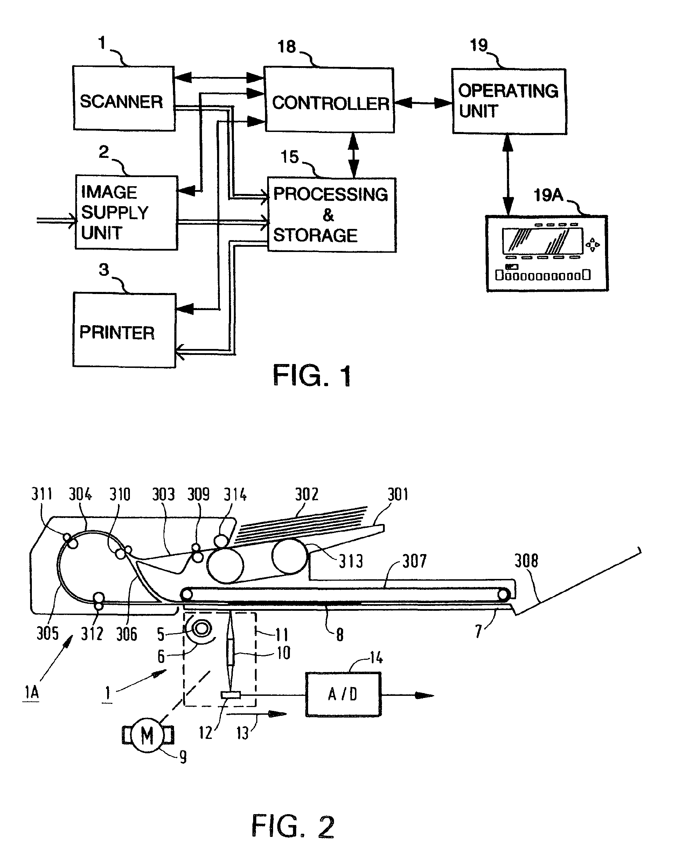

Fig. 1 shows the general layout of an image reproduction apparatus according to the invention. The apparatus comprises a scanner 1 for opto-electronic scanning of a document and delivering digital image information corresponding thereto, a network connecting unit 2 for receiving print files from coupled workstations, hereinafter referred to as the supply unit, and a printing unit 3 for printing digital image information on a support material.

Both the scanner 1 and the supply unit 2 are connected to a system 15 for the processing and intermediate storage of image information, which is in turn connected to the printer unit 3. Scanner 1, supply unit 2, system 15 and printer unit 3 are connected to a central control unit 18 which is also connected to an operating unit 19 provided with an operator control panel 19A with operating elements and a display screen for use by an operator.

The scanner 1 is shown in greater detail in Fig. 2. It is provided with a tubular lamp 5 and a reflector 6 co-operating therewith, by means of which a narrow strip of a document 8 placed on a glass platen 7 is exposed. The scanner also comprises an array 10 of imaging glass fibres (a "selfoc" lens array), by means of which the light reflected by the document is projected on to a sensor array, for example a CCD array 12. The lamp 5, reflector 6, selfoc lens array 10 and CCD array 12 are combined on a carriage 11, which during scanning is advanced by a servomotor 9 at a uniform speed in the direction of arrow 13, so that the document 8 is scanned line by line by the CCD array 12. The position of the carriage 11 is continuously measured by means known per se and is used, inter alia, for the feedback circuit of the servomotor 9.

In this way, each image point of the document is converted into an analog signal corresponding to the grey value of that image point. The analog signal is then converted by an A/D converter 14 to a digital signal for each image point.

The scanner 1 is equipped with an automatic document feeder (ADF) 1A. This comprises a feed tray 301 to receive a stack of documents 302 for copying, a separation mechanism 313, 314 for taking documents one by one from the bottom of the stack, and a transport mechanism, consisting of the transport paths 303, 304, 305, 306 and the transport roller pairs 309, 310, 311, 312 for transporting a removed document to the platen 7. The document 8 is transported over the platen 7 by a transport belt 307 which, after the scanning by the scanning carriage 11, transports it to the delivery tray 308. The ADF 1A is provided with sensors in the feed tray 301 and in the transport paths 303, 304, 305, 306, by means of which the format and the orientation of the documents can be measured. The sensors are not shown in the drawing but the technology associated therewith is generally known and will not therefore be explained in greater detail.

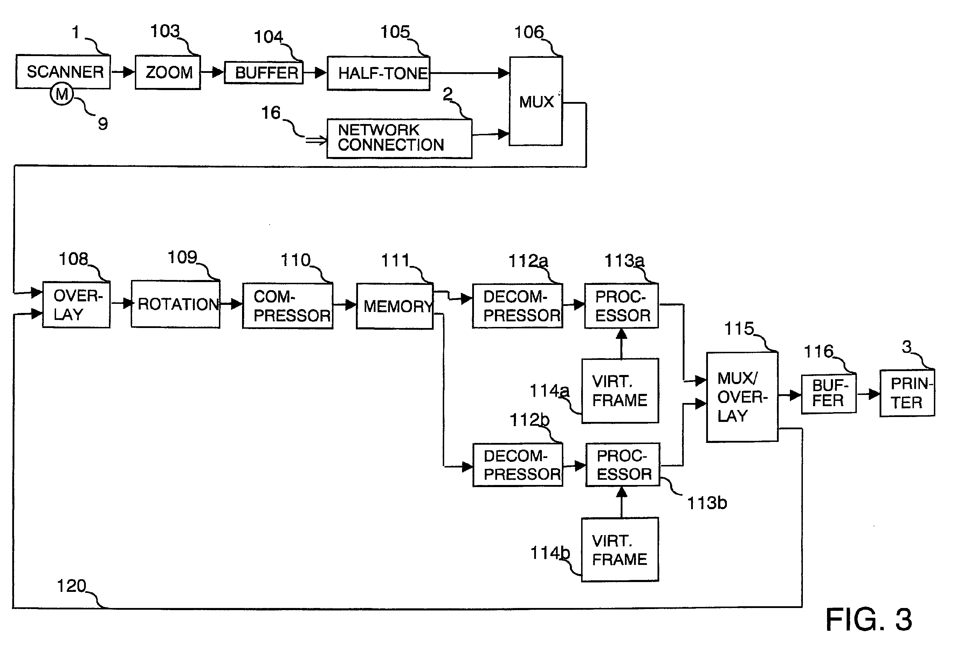

Fig. 3 is a diagrammatic overview of the structure of a system 15 for processing and intermediate storage of image information, the rectangles representing functional modules (both physical components and software modules) and the arrows the data flow from one module to the next. The scanner 1, the supply unit 2 and the printer unit 3 are included in this drawing in order to show their position with respect to the system 15. Although not shown in the drawing, the various elements of the system 15 are connected to the control unit 18, which co-ordinates their operation.

The digital signals from the scanner 1 are fed to a ZOOM module 103 which, if required, carries out enlargement or reduction by interpolation.

The signals from the ZOOM module 103 are passed via a buffer 104 to a half-tone module 105 which converts the signals, which then still describe grey values, into binary signals which specify one of two values: zero or one, for each pixel, so that these signals become suitable for controlling a printer unit which can print only white or black dots. Many half-tone processing operations are described in the literature, so that no explanation is necessary. It is immaterial to this specification what half-tone processing is applied provided the resulting signals are binary.

The signals from the half-tone module 105 are in turn passed to a multiplexer 106. Connected to another input of multiplexer 106 is a supply unit 2 for digital image signals from a local network 16, so that digital signals from an external source, such as a workstation, can be supplied. The supply unit comprises a PDL interpreter, which converts the received - coded - digital image signals into binary signals suitable for controlling the printer unit.

The multiplexer 106 passes one of two data streams (from the scanner or from the network), to an overlay module 108. The latter has a second input to which a feedback line 120 is connected for feeding back signals from the memory 111, which will be discussed further hereinafter.

In the overlay module 108, the signals from multiplexer 106 and the feedback line 120 can be mixed in accordance with logic functions on a pixel basis, corresponding to the mixing of two images. Examples of such logic functions are: OR, AND, EXOR. The mixing of binary image signals in this way is generally known from the literature and requires no further explanation here.

The overlay module 108 is connected to a rotation module 109, in which the image defined by the signals from the overlay module 108 can be rotated through an angle of 0, 90, 180 or 270°.

The signals from rotation module 109 are then compressed in a compression module 110 and stored in a memory 111. Although compression is not strictly necessary, it is recommended, because in this way the data of more documents can be stored. The compression method can, for example, be run length coding. The memory 111 is provided with a management system (not shown), which updates the addresses where the data of the documents are stored.

The memory 111 is constructed with two independent read-out lines, so that the image data of two documents can be read out simultaneously. These read-out lines are each connected to a decompression module (112a, 112b). These are connected to processing circuits which in principle are identical and are formed by multifunctional processing modules 113a, 113b. These modules can so process the image signals that an enlarged or reduced image or an extract from a larger image forms and mix image data with artificial image data corresponding to a blank (white) image and be delivered by a virtual-frame module 114a, 114b, which is also connected to module 113a, 113b. The purpose of this is to be able to make image data which describe a larger image than the image data from the memory 111, for example an image, the right-hand half of which consists of a scanned document and the left-hand half of which is blank (white).

The processing modules 113a, 113b are connected to an overlay multiplexer 115, in which one of the image signals can be selectively passed or both image signals can be mixed, in the same way as described for overlay module 108.

Overlay multiplexer 115 has two outputs. One is the feedback line 120 already mentioned, which makes it possible for images stored in the memory to be rotated and also overlaid with newly supplied (scanned) images. The other output is connected via a buffer 116 to the printer unit 3, which will be discussed in greater detail hereinafter.

Buffers can be provided at various places in the circuit described. However, since these are not relevant to the principle of operation they have been omitted from this description.

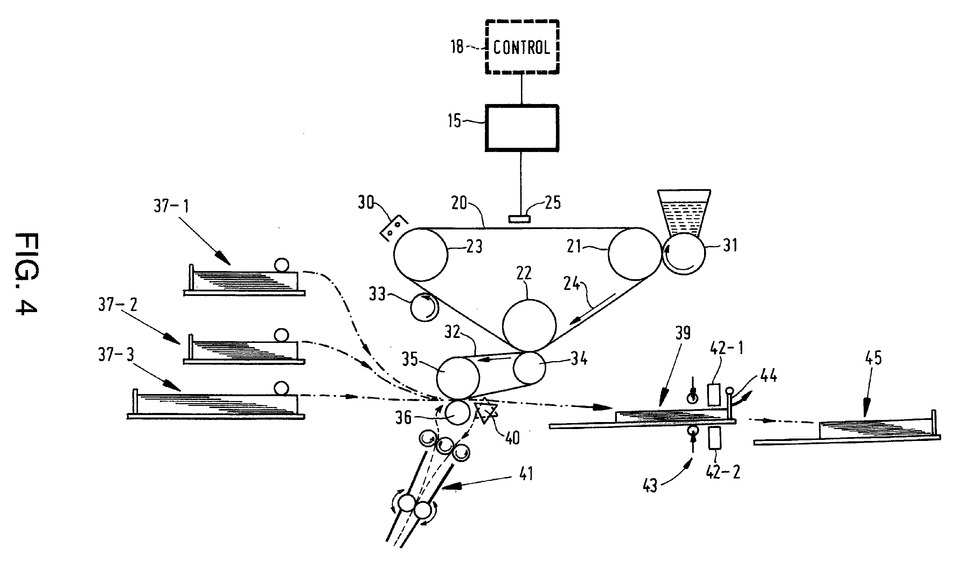

For a description of the printer unit 3 reference should be made to Fig. 4. This printer unit is provided with an endless photoconductive belt 20 which is advanced in the direction of arrow 24 at a uniform speed by means of drive and guide rollers 21, 22 and 23 respectively.

By means of the processed image data supplied from system 15, an LED array 25 is so controlled that the photoconductive belt 20, after being electrostatically charged by a corona device 30, is exposed image-wise line by line.

The latent charge image forming on the belt 20 as a result of the exposure is developed with toner powder by means of a magnetic brush device 31 to form a toner image which in a first transfer zone is then brought into contact under pressure with an endless inter-medium belt 32 made from or covered with an elastic and heat-resistant material, e.g. silicone rubber. In these conditions the toner image is transferred by adhesion forces from the belt 20 to the belt 32. After this image transfer, any remaining toner powder residues are removed from the photoconductive belt 20 by means of a cleaning device 33, whereafter the belt 20 is ready for re-use.

The inter-medium belt 32 is trained over drive and guide rollers 34, 35, the inter-medium belt 32 being heated to a temperature above the softening temperature of the toner powder, for example by means of an infrared radiator disposed inside roller 35. While the belt 32 with the toner image thereon is advanced, the toner image becomes sticky as a result of the heating.

In a second transfer zone between the belt 32 and a pressure roller 36, the sticky toner image is transferred under the influence of pressure and simultaneously fixed on a copy sheet fed from one of the reservoirs 37-1, 37-2 or 37-3.

The copy thus obtained can then be delivered to a collecting tray 39 or be fed by a deflecting element 40 (placed in the position shown by broken lines) to an inverting device 41 in which the copy sheet is inverted, whereafter it is again fed to the second transfer zone between the belt 32 and the pressure roller 36 for printing on the other side with a powder image in that transfer zone and then delivered to the collecting tray 39.

The collecting tray 39 is provided with two stapling heads, one for stapling portrait copies (copies which are readable when the long side is held upright) and one for stapling landscape copies (copies which are readable when the long side is kept horizontal); only one of these is shown in the drawing as 42-1 and 42-2. The collecting tray is also provided with a removable end stop 44 and a transport roller pair 43, which latter can be brought into two positions, a first in which the rollers do not touch the copy sheets and another in which the rollers engage a packet of copy sheets in the collecting tray.

When all the copy sheets of a copying or printing order are ready and collected in the collecting tray 39, they can be joined together by one of the stapling heads 42. The end stop 44 is then opened, the transport roller pair 43 is brought into the said second position and the packet of copy sheets is discharged to the delivery tray 45.

Instead of or in addition to the stapling heads, other finishing units can be installed, e.g. a punch and a binding unit (not shown).

Fig. 4 shows three copy sheet reservoirs 37-1, 37-2 and 37-3, the first two being arranged for copy sheets of A4 format and the last one for copy sheets of A3 format. Reservoir 37-1 is the standard reservoir from which copy sheets are delivered unless a different reservoir is selected by the operator. Reservoir 37-2 is arranged for copy sheets of the same format as 37-1 and is intended for a different kind of copy sheet, for example a different colour or a different weight per unit area. The three reservoirs contain copy sheets with one and the same orientation, i.e. crosswise with respect to the direction of transit through the machine. Nevertheless, on the operator control panel 19A the operator is offered copy sheets in both orientations (crosswise and lengthwise). If the operator selects a lengthwise oriented copy, or if he places an original document lengthwise in the ADF 1A, then the digital image is automatically rotated in the rotation unit 109 (Fig. 3) for a quarter turn so that a "crosswise" oriented copy sheet can nevertheless be used.

Of course there can be a different number of reservoirs than three and reservoirs can also be used for different formats or copy sheet orientations.

The various parts of the printer unit 3 are controlled by the central control unit 18, directly or through the agency of sub-control modules.

Using the above system it is possible to make copies printed on one or both sides. Duplex copies may have one of two forms, identified by the binding edge, i.e. the edge around which a copy held in a readable position must be turned in order to enable the back of the page to be visible in a readable position. In western documents, the most common form is that in which the binding edge is situated on the left of the document image. This is often called normal duplex or book duplex. The second form is one in which the binding edge is at the top of the document image and this is known as tumble duplex or calendar duplex.

The document image can be reproduced on a document in two ways, i.e. with the text lines parallel to the short side of the sheet, this is known as "portrait", and with the text lines parallel to the long side of the sheet, and this is known as "landscape".

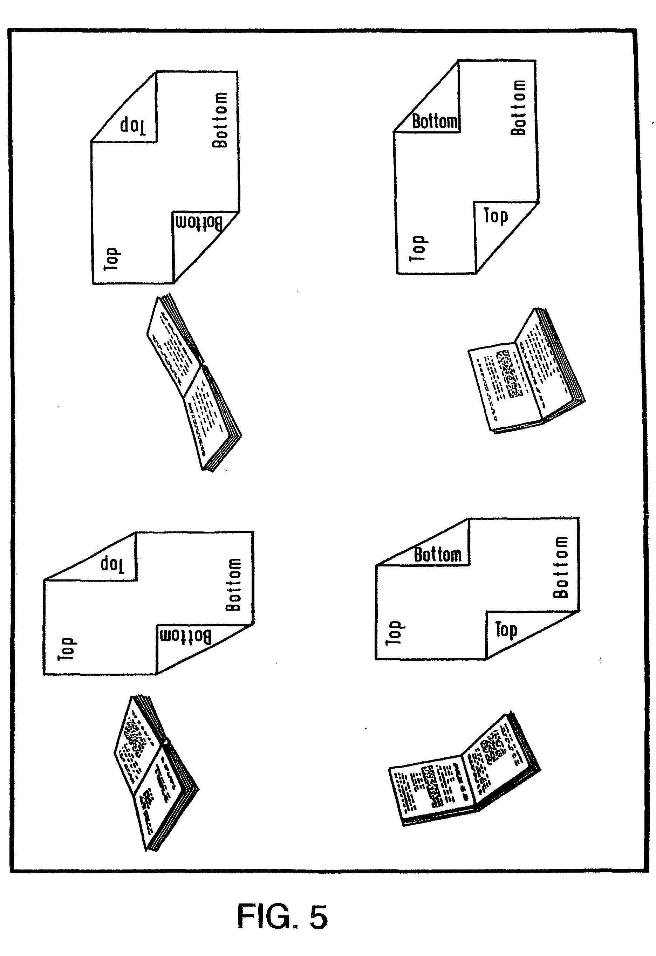

Fig. 5 gives a clear picture of the four document categories as classified above.

According to the invention, the scanner relates the image orientation of the document image to a fixed direction in the machine. Consequently, the feed or entry orientation of the document governs the image orientation accepted by the machine. Thus if an operator always places documents with the text in a fixed direction, then the image orientation is known for the machine. A convenient choice is to introduce the documents always so that they are semi-readable. This means readable taking into account the machine introduction requirements. For example, if the operator places the documents on the platen, that means that he turns the documents naturally from a position readable to him, and places them on the platen. A portrait document should be placed upright, i.e. with the short (bottom) side towards the operator; and a landscape document should be placed crosswise, i.e. with the long (bottom) side towards the operator. If the operator uses the ADF 1A, he should introduce the documents in the same orientation, since the ADF does not change the document orientation.

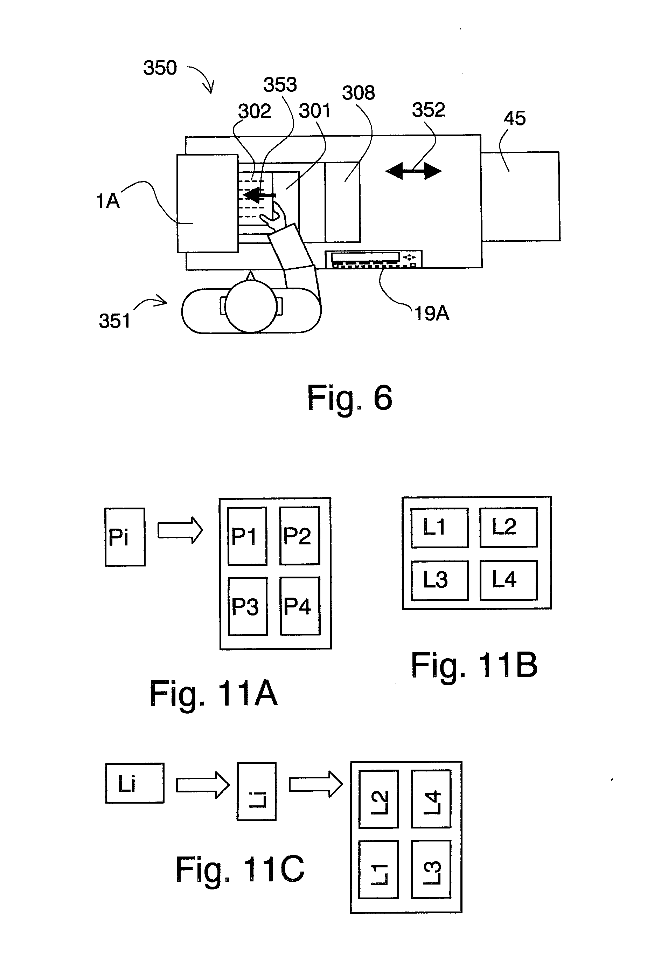

Fig. 6 is a top plan view of the system 350, showing the ADF 1 A with the entry tray 301, an inserted document 302, and the delivery tray 308 for original documents. Also shown are the delivery tray 45 for copies and the operator control panel 19A. An operator 351 is shown diagrammatically. A double arrow 352 indicates the direction of transport in the machine, and an arrow 353 the direction of introduction of the documents for scanning. Broken lines on the document 302 indicate the direction of reading the document, bearing in mind that the image on the document is on the underside because documents must be placed in the ADF with the image side down. If the ADF 1A is swung up to free the platen 7 for scanning directly therefrom, a document must be introduced in the same position as in the entry tray 301. The image shown indicates what is meant by "semi-readable", and it should also be noted that the top of the document image is furthest away from the operator.

The stipulation that documents should be introduced in semi-readable form has the advantage that it is easily carried out by the operator. He need not be concerned with how and with respect to what terms such as portrait or landscape are defined. In the case of a square or round original, concepts such as portrait and landscape are not even defined. In that case, however, the direction of reading the document must always be clearly established.

It is not always possible to introduce documents in semi-readable form. One example of this is that the machine can only be adapted to process A3 documents in the longitudinal direction, because of the width of the platen 7 and/or of the ADF 1A. To offer a solution here, one possibility is to indicate on the operator control panel 19A by means of the operating elements that the document has not been introduced in the specified manner. The control unit 18 interprets this "different introduction" entry as a rotation of the document reading direction through 90°. Also, optionally, an arbitrary characterisation of the image orientation on the document can be input. However, it should be noted that such inputting is unnecessary by far the majority of cases. Consequently, this inputting does not form part of the standard settings on the operator control panel 19A.

For correct finishing of the copies, it is also necessary to know the document orientation in addition to the image orientation. This is expressed in terms of "lengthwise" (i.e. with the long side parallel to the transport direction 352 in the machine) and "crosswise" (i.e. with the short side parallel to the transport direction 352 in the machine).

If use is made of the ADF 1A, the document format and orientation are automatically determined by the ADF 1A with the sensors described above.

If documents are placed directly on the platen 7, the document format and orientation can be picked up by sensors beneath the platen. If the machine is not provided with such sensors, the said parameters can also be derived from the copy format and orientation set for the copies by the operator and the enlargement scale set. For example, if "A4 lengthwise" is set for the copies with an 0.7 enlargement, there is automatically the decision that the original document is "A3 lengthwise".

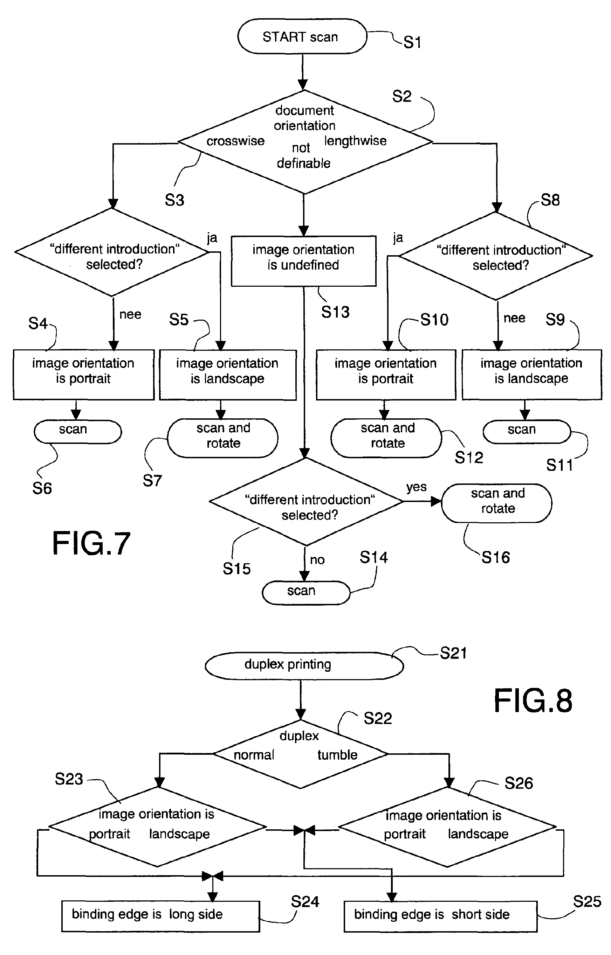

Fig. 7 is a flow diagram of the program in the control unit 18 to control the machine during the scanning of a document. After an operator has introduced original documents into the ADF 1A, he actuates the start button of the machine, whereafter scanning starts (S1). The control unit first of all determines the document format and orientation in the manner described above (S2).

If the document orientation is "crosswise", the control unit 18 checks whether the operator has input "different introduction" via the operator control panel 19A (S3). If that is not the case, the control unit 18 characterises the document as "portrait" (S4), otherwise as "landscape" (S5). If the document is "portrait", it is scanned and the image data generated in these conditions are stored in the memory 111(S6). If "different introduction" is input, the document is scanned and the image data thus generated are rotated through 90° in the rotation module 109 and then stored in the memory 111 (S7). In an alternative embodiment, the image data are not rotated in the latter case, but are provided with a label indicating that the image is in a different position.

If step S2 finds that the document orientation is "lengthwise", the control unit 18 checks whether the operator has input "different introduction" via the operator control panel 19A (S8). If that is not the case, the control unit 18 characterises the image orientation on the document as "landscape" (S9), otherwise as "portrait" (S10). If the image orientation is "landscape", the document is scanned and the image data thus generated are stored in the memory 111 (S11). If the "different introduction" is input, the document is scanned and the image data thus generated are rotated through 90° in the rotation module 109 and then stored in the memory 111 (S12). In an alternative embodiment, in the latter case, the image data are not rotated, but are provided with a label indicating the position of the image. The characterisation "portrait" or "landscape" is stored with the image data, because it is necessary for subsequent processing.

It may occur that an introduced document has no clear orientation, for example it is a square or a round document. In that case, step S2 cannot establish any document orientation and the control unit 18 characterisies the document as "undefined" (S13).

The control unit 18 then checks whether the operator has input "different introduction" via the operator control panel 19A (S14). If that is not the case, the document is scanned and the image data thus generated are stored in the memory 111 (S15). If the "different introduction" has been input, the document is scanned and the image data thus generated are rotated through 90° in the rotation module 109 and then stored in the memory 111 (S16). In an alternative embodiment, in the latter case the image data are not rotated but are provided with a label indicating that the image is in a different position.

In the case of documents with an "undefined" orientation, other default values are used which are pre-programmed for processing steps, for example the choice of the orientation of the copy paper.

Fig. 8 shows the decision scheme used by the control unit 18 in the case of an operator giving an order for duplex copying of simplex documents (S21). Step S22 checks whether the job relates to "normal duplex" or "tumble duplex". In the case of "normal duplex", a check is then made whether the image orientation established during the scanning is "portrait" or "landscape" (S23). In the case of "portrait", the control unit 18 chooses the binding edge of the duplex copies along the long side thereof (S24), otherwise along the short side (S25). In the case of "tumble duplex" (S22), for a document with an image orientation established as "portrait", step S26 selects the binding edge of the copies along the short side (S25), otherwise along the long side (S24).

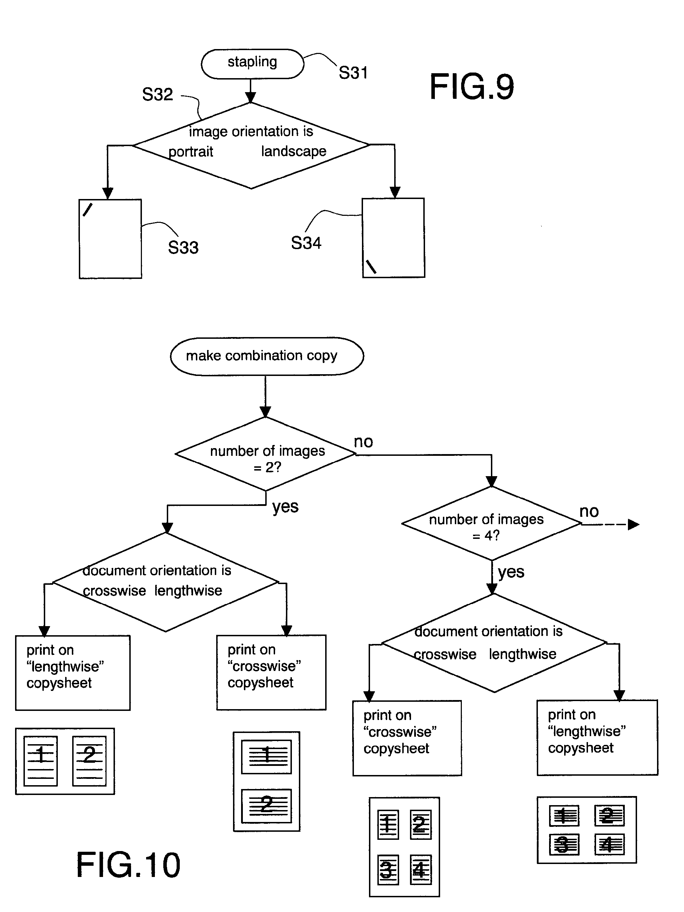

Fig. 9 shows the decision scheme used by the control unit 18 in the case of an order being given for stapling a copy set (S31). Here the image orientation established during scanning is used to establish the location of the staple (S32). If the orientation is "portrait", a staple is introduced at the left-hand edge of a short side (S23). If the orientation is "landscape", the staple is introduced at the left-hand side of a long side (S34). A similar decision scheme is used for other finishing operations, such as binding or punching.

The apparatus described is also suitable for making combination copies in which more than one original image is printed on one side of a copy sheet, possibly after reduction. Two images on one side of a copy are frequently termed "two-up" and more images "multiple-up".

Where such combination copies are made, the separate documents are first scanned and stored in the memory 111, reduced if necessary. Two images are then read out by means of the two read-out lines of the memory and are combined to form an image in the overlay multiplexer 115, after which the combined image is written in the memory 111 via the feedback line 120. The combined image can then be read out and passed as a two-up image to the printer unit 3, or be combined again with another compound image in order to make a multiple-up image. The sequence of the composite images is always from left to right and from top to bottom.

A two-up copy has an image orientation which is opposed to the image orientation of the constituent images. If, for example, the images of two portrait documents are combined on one copy side, the image orientation on the copy is "landscape". The control unit 18 then in principle selects a "lengthwise" copy orientation. The decision scheme used by the control unit 18 is shown in Fig. 10.

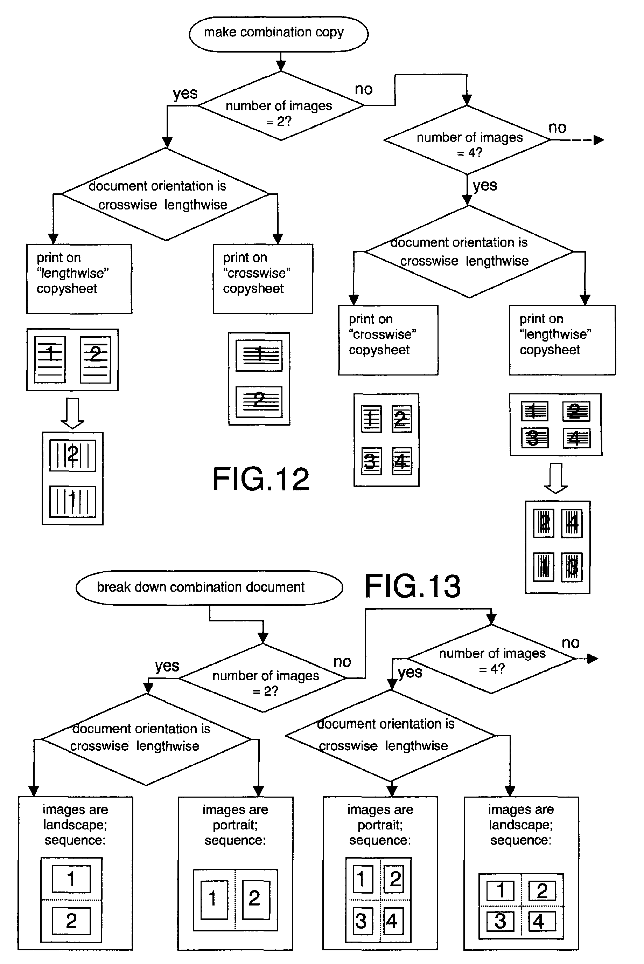

If, however, the printer unit 3 has available only copy sheets in a single orientation, namely crosswise with respect to the direction of transport, then the constituent images in such cases must first be rotated through a quarter turn in order to be able to make a combination image with the correct orientation. As a result, the sequence of the constituent images on the combination copy can vary, as will be apparent from the example in Fig. 11A-C.

Fig. 11A shows a four-up copy with portrait images. The constituent images Pi (i = 1- 4) are delivered by the scanner upright, i.e., crosswise with respect to the direction of transport in the machine and are combined on the combination copy in the sequence from left to right and from top to bottom. The combination copy itself has the "crosswise" orientation, and can therefore be printed without difficulty.

Fig. 11 B shows a combination copy with landscape images Li (i = 1 - 4). This copy therefore itself has a horizontal orientation. However, the printer unit can only print copies in the crosswise orientation. For this purpose steps are taken as shown in Fig. 11C. Since landscape images have to be introduced into the scanner in the lengthwise direction, the digital images Li are also delivered in the lengthwise orientation by the scanner. These images Li are first turned through a quarter turn and then stored in the memory 111, after which they are combined to form a combination copy. During this combining operation a different sequence is maintained than in the above-described case of portrait images, namely from bottom to top and from left to right. The control unit 18 automatically selects a suitable sequence in response to the entry orientation of the original documents.

For a printer unit like the one described with reference to Fig. 11A-C, the decision scheme of Fig. 10 changes to that shown in Fig. 12.

Using the apparatus described it is also possible to break down a combination document on which at least two separate images are located, and print the separate images, possibly after enlargement, on separate copy sheets. The location of the separate images on the document again plays a part in such breaking down. When programming a job of this kind, the operator inputs on the machine operator control panel 19A the number of constituent images on the document and introduces the document into the ADF 1A in the semi-readable form as defined above. By reference to the document orientation and the number of constituent images the control unit 18 then automatically determines the image orientation of the constituent images and the sequence in which they must be printed. The associated decision scheme is shown in Fig. 13.

The constituent images are then extracted from the total image in a processing unit 113 and, if required, enlarged, whereafter they are passed to the printer unit 3 which makes separate prints thereof.

Although the invention has been explained by reference to the above exemplified embodiment, it is not limited thereto. The skilled person will devise other embodiments within the text of the following claims. These are considered as coming within the scope of protection of the patent.

## Claims

1. A digital copying apparatus for making a copy of a document, wherein a document has an orientation associated with a physical direction of the document with respect to the apparatus, and wherein a document contains an image with a reading direction and with an image orientation with respect to the document,
which apparatus comprises
- a scanner unit for scanning a document and in so doing generating a digital image corresponding to the image on the document,
- a processing unit for processing digital images,
- a printer unit for making a copy on the basis of conversion of a digital image into an image on a receiving medium, if necessary observing the image orientation established for the image on the document,
- a control unit connected to the scanner unit, the processing unit and the printer unit,
**characterised in that**
the control unit automatically defines the image orientation of the image on each document on the basis of the orientation of the document and an assumption that the reading direction of the image on the document is always situated in a fixed predetermined position with respect to the scanner unit.

2. Apparatus according to claim 1, wherein the reading direction assumed by the control unit corresponds to the reading direction of an operator standing in front of the apparatus.

3. Apparatus according to claim 1, also comprising
- a finishing unit for finishing copies, observing the image orientation automatically established for the image on the document.

4. Apparatus according to claim 3, wherein the finishing unit comprises one or more stapling heads.

5. Apparatus according to claim 3, wherein the finishing unit comprises a punching device.

6. Apparatus according to claim 3, wherein the finishing unit comprises a binding unit.

7. Apparatus according to claim 1,
wherein the printer unit is adapted to make duplex copies by duplex printing of the receiving medium,
**characterised in that**
the printer unit when making duplex copies of simplex documents automatically selects the binding edge for each copy at a fixed predetermined side with respect to the automatically defined image orientation of the image on the document.

8. Apparatus according to claim 1,
wherein the processing unit is adapted to make combination copies by combining at least two images, each originating from a different document, on one side of the receiving medium
**characterised in that**
the printer unit when making combination copies automatically selects for each copy an orientation based on the automatically defined image orientation of the images on the documents.

9. Apparatus according to claim 8,
wherein the printer unit can only make copies with a fixed copy orientation, and wherein the processing unit is also provided with a rotation device for rotating digital images through right angles or a multiple thereof,
**characterised in that**
the processing unit if necessary switches on the rotation device in order to rotate images for combination and
combines the images for combination, possibly after rotation, in a sequence which it selects automatically on the basis of the automatically defined image orientation of the images on the documents.

10. Apparatus according to claim 1,
wherein the processing unit is adapted to break down combination documents by generating digital images each corresponding to a different image on one side of such a document,
**characterised in that**
the control unit automatically defines for each document the image orientation of the images on one side of the document on the basis of the orientation of the document and an assumption that the reading direction of the images on the document is always situated in a fixed predetermined direction with respect to the scanner unit, and **in that** when breaking down combination documents the processing unit processes the said digital images observing said image orientation.

11. A method of making a copy of a document in a digital copying apparatus, wherein a document has an orientation associated with a physical direction of the document with respect to the apparatus, and wherein a document contains an image with a reading direction and with an image orientation with respect to the document,
which method comprises
- scanning a document with a scanner unit and in so doing generating a digital image corresponding to the image on the document,
- processing digital images,
- making a copy with a printer unit based on converting a digital image into an image on a receiving medium, if necessary observing the image orientation established for the image on the document,
**characterised in that**
the image orientation of the image on each document is defined automatically on the basis of the orientation of the document and an assumption that the reading direction of the image on the document is always situated in a fixed predetermined direction with respect to the scanner unit.

12. A method according to claim 11, wherein the assumed reading direction corresponds to the reading direction of an operator standing in front of the apparatus.

13. A method according to claim 11, also comprising
- finishing copies observing the image orientation automatically established for the image on the document.

14. A method according to claim 13, wherein the finishing step comprises applying one or more staples.

15. A method according to claim 13, wherein the finishing step comprises punching one or more holes.

16. A method according to claim 13, wherein the finishing step comprises binding a set of copies.

17. A method according to claim 11,
wherein the printing step comprises making duplex copies by duplex printing of the receiving medium,
**characterised in that**
in the printing step, in the making of duplex copies of simplex documents, the binding edge for each copy is automatically selected at a fixed predetermined side with respect to the automatically defined image orientation of the image on the document.

18. A method according to claim 11,
wherein the processing step also comprises the making of combination copies, by combining at least two images, each originating from a different document, on one side of the receiving medium,
**characterised in that**
in the printing step, in the making of combination copies, the orientation selected automatically for each copy is made on the basis of the automatically defined image orientation of the images on the documents.

19. A method according to claim 18, applied in an apparatus with a printing unit which can only make copies with a fixed copy orientation,
wherein the processing step is adapted to rotate through right angles the images for combination and
wherein the images for combination, possibly rotated, are combined in a sequence which is automatically selected on the basis of the automatically defined image orientation of the images on the documents.

20. A method according to claim 11,
wherein the processing step is adapted to break down combination documents into digital images each corresponding to a different image on one side of such a document,
wherein the image orientation of the images on one side of the document is automatically defined for each document on the basis of the orientation of the document and an assumption that the reading direction of the images on the document is always situated in a fixed predetermined direction with respect to the scanner unit, and in that in the processing step, in the breakdown of combination documents, the said digital images are processed observing said image orientation.
